# EUROPEAN PATENT SPECIFICATION

(11) **EP 2 144 853 B1**
(45) Date of publication and mention of the grant of the patent: **05.09.2012**
(21) Application number: 08733460.3
(22) Date of filing: 08.05.2008
(51) Int. Cl.: C02F 1/44, B01D 61/36, B01D 71/02, B01D 65/02

(54) **DESALINATION METHOD**
ENTSALZUNGSVERFAHREN
PROCÉDÉ DE DÉSALINATION

(30) Priority: 08.05.2007 AU 2007902436 P; 11.07.2007 AU 2007903758 P
(43) Date of publication of application: 20.01.2010
(73) Proprietor: The University Of Queensland, St. Lucia QLD 4072 (AU)
(72) Inventor: DUKE, Mikel, Melbourne, Victoria 8001 (AU)
(74) Representative: Prüfer & Partner GbR European Patent Attorneys
(86) International application number: PCT/AU2008/000642
(87) International publication number: WO 2008/134825

(56) References cited:
- WO-A1-99/23034
- WO-A1-03/096826
- WO-A2-2007/025104
- US-A- 3 340 186
- US-A- 3 405 058
- US-A1- 2006 144 788
- US-B1- 6 340 433
- US-B1- 6 440 309
- US-B2- 6 943 123
- CAMPANIELLO J ET AL: "Long-term pervaporation performance of microporous methylated silica membranes", CHEMICAL COMMUNICATIONS - CHEMCOM; [6015D], ROYAL SOCIETY OF CHEMISTRY, GB, 1 January 2004 (2004-01-01), pages 834-835, XP002391203, ISSN: 1359-7345, DOI: DOI:10.1039/B401496K
- M. DUKE ET AL: 'High selectivity microporous silica membranes for lactic acid dehydration', [Online] 23 April 2006, XP055001737 Retrieved from the Internet: <URL:http://espace.library.uq.edu.au/eserv. php?pid=UQ:12222&dsID=dldn_wcpt5.pdf> [retrieved on 2011-06-30]
- BOWEN ET AL: "Fundamentals and applications of pervaporation through zeolite membranes", JOURNAL OF MEMBRANE SCIENCE, ELSEVIER SCIENTIFIC PUBL.COMPANY. AMSTERDAM, NL, vol. 245, no. 1-2, 1 December 2004 (2004-12-01), pages 1-33, XP005003733, ISSN: 0376-7388

## Description

This invention relates to a method for desalination of water which advantageously may have lower energy requirements than current desalination processes. In particular, it relates to a method for use in converting brackish water or sea water to potable water.

### BACKGROUND TO THE INVENTION

The availability of drinking water is a major problem in the world today. Only 1 % of the world's water is fresh water suitable for humans to drink, 97% exists as salt water and the other 2% is frozen. Demand for fresh water continues to increase at a dramatic rate with current fresh water demand being about 33% of water available from rainfall. Industrial pollution has negatively impacted on the usability of groundwater (rivers, lakes and bores). Coupled to increased demand and the effect of pollution is global climate change which has changed rainfall patterns resulting in a significant number of regions facing serious water scarcity.

The scarcity of potable water can be addressed in a number of ways including water conservation (through storage and recycling) and reduced water usage. These approaches only preserve the available water, they do not increase the amount of freshwater available. The most promising approach for increasing the amount of available potable water is desalination of sea water.

There are many thousands of desalination plants in operation around the world but they only contribute about 3% of the world's drinking water. The primary barrier to more widespread use of desalination technology is cost. Desalination capacity is unlikely to increase until available fresh water decreases to a point to cause serious inconvenience or the cost of desalination decreases significantly.

The available desalination technologies can be grouped under two main technologies: thermal processes and membrane processes. The main membrane processes are reverse osmosis and electrodialysis. A significant and growing proportion of desalination capacity comes from reverse osmosis. Unfortunately, reverse osmosis has a high energy requirement (to generate the pressure differential required to drive the process) or, if lower pressures are used, the process can suffer from low flux (thus requiring large membrane surface areas and thus a large plant investment). Membrane fouling is also a common problem requiring frequent membrane replacement and/or one or more pre-treatment steps.

An alternate membrane technology is pervaporation. Pervaporation can be considered as a combination of permeation and evaporation. A liquid feed flows over one side of a membrane. One component of the liquid feed permeates favourably through the membrane with the remainder of the feed passing as the retentate. A minor vacuum on the permeate side of the membrane may be used to vaporise the permeate that has passed through the membrane. The permeate vapour is subsequently condensed to recover the desired component. Pervaporation is considered more effective than distillation as the separation is not limited by free surface thermodynamics.

A water purification apparatus based on pervaporation has been described in United States patent number 6887385. The patent is mainly directed to using pervaporation for agricultural purposes. The pervaporation relies upon a humidity difference between the retentate side and the permeate side of a membrane. The membranes used are highly selective but at the cost of a very low flux of permeate. Furthermore, the feed is typically supplied in the form of vapour on the retentate side of the membrane in order to pass through the highly selective membrane.

A desalination process based upon pervaporation is described by Zwinjnenberg et. al. [H.J. Zwijnenberg, G.H. Koops, M. Wessling; J. Membrance Sci. 250 (2005) 235-246] that utilises solar energy to heat the feed liquid. The key feature of this process is the use of dense polymeric membranes similar to those commonly employed in reverse osmosis and so the resulting flux was low. The process specifically uses polyetheramide-based polymer films and is more akin to a solar distillation process than pervaporation.

Another process, referred to as vacuum membrane distillation, is described by Meindersma et. al. [G. W. Meindersma, C.M. Guijt, A.B. de Haan; Desalination 187 (2006) 291-300]. In this process an aqueous feed flows over a membrane and a vapour is removed from the opposite side of the membrane after passing across an air gap, followed by condensation on a cold surface integrated into the module. The process follows a conventional air gap membrane distillation setup utilising a hydrophobic membrane to simply provide a free surface for the evaporation of water. The process has mainly been used for separating volatile components (such as chloroform) from aqueous solutions.

Despite the efforts to date the known systems fail to achieve suitable flux at sufficiently low cost to be viable commercial solutions. Furthermore, the known desalination processes tend to suffer from fouling leading to further reduced flux and necessitating membrane replacement.

### OBJECT OF THE INVENTION

It is an object of the present invention to provide a useful alternative to existing desalination approaches.

Further objects will be evident from the following description.

### DISCLOSURE OF THE INVENTION

The present invention provides a method of desalinating water including the steps of:
(a) supplying salty water to a retentate side of a porous inorganic molecular sieve membrane, the porous inorganic molecular sieve membrane being selected from the group consisting of methyl triethoxy silane molecular sieve membranes and carbonised template molecular sieve silica membranes;
(b) removing water vapour which emerges on a permeate side of the porous inorganic molecular sieve membrane to maintain the permeate side of the membrane at a low water vapour pressure; and
(c) collecting desalinated water vapour which emerged from the permeate side of the membrane.

The water vapour can be removed from the permeate side of the porous inorganic molecular sieve membrane by the application of a vacuum.

If required, the water vapour may be removed from the permeate side of the porous inorganic molecular sieve membrane by a flow of gas.

Suitably, the salty water is supplied at a pressure above atmospheric pressure.

Preferably, the salty water is supplied at a pressure of from 0.1 MPa to 1.0 MPa, more preferably from 0.2 MPa to 0.6 MPa, in particular of about 0.4 MPa.

The method may further include the step of flushing salt from the permeate side of the porous inorganic molecular sieve membrane using water.

Suitably, the porous inorganic molecular sieve membrane comprises pores having a diameter of from 0.2 nm to 1.0 nm, more preferably from 0.25 nm to 0.6 nm. In particular, the pores have a diameter of about 0.30 nm.

### BRIEF DETAILS OF THE DRAWINGS

To assist in understanding the invention preferred embodiments will now be described with reference to the following figures in which:
FIG 1 is a schematic of a water desalination plant;
FIG 2 is a graph of desalination efficiency;
FIG 3 is a graph showing the flux over time for various salt concentrations for the CTMSS membrane;
FIG 4 is a graph showing the behaviour of flux and salt rejection with temperature for the CTMSS membrane; and
FIG 5 is a graph showing the behaviour of flux and salt rejection at various applied feed pressures for the CTMSS membrane.

### DETAILED DESCRIPTION OF THE DRAWINGS

In describing different embodiments of the present invention common reference numerals are used to describe like features.

The membranes employed in the present invention are porous inorganic molecular sieve membranes formed on a supporting α-alumina substrate such as the type described in our granted United States patent number 6943123 which may be formed via a two-step catalysed hydrolysis sol-gel process. The method of synthesis of these membranes is detailed therein.

The term "inorganic molecular sieve membrane" is a term of the art used to refer to membranes which contain an inorganic element component. Thus, the membranes need not, and indeed are often not, entirely composed of inorganic elements. Organic, i.e. carbon-containing, chains and the like are often present and may be essential to generate the molecular sieve structure.

The porous inorganic molecular sieve membranes referred to herein include those which are made up entirely of inorganic elements, such as certain zeolites, as well as those that comprise a mix of inorganic and organic components. They may be made up of substantially inorganic elements with a lesser amount of organic elements or may be substantially organic with a lesser amount of inorganic elements or contain comparable amounts of inorganic and organic elements.

Two types of membrane used in the present invention are discussed below. Both of these membranes contain inorganic and organic elements. One is a methyl tri-ethoxy silane sol coated membrane, designated MTES, and the other is a carbonised template molecular sieve silica membrane, designated CTMSS.

The films were deposited by the dip-coat method using an automatic dip coater in a dust-free laminar fume cupboard. Calcination of the films was conducted at 1°C per minute to 600°C for alumina and 500°C for methyl templated. Molecular sieve silica layers were ramped at 0.5°C to 500°C. All layers were repeated to reduce the likelihood of defects which might effect filtration performance.

The CTMSS membrane is synthesised in a similar manner but with the addition of a short chain surfactant (one non-limiting example of such a surfactant is the inclusion of 3 wt% triethyl hexyl ammonium bromide) to the silica sol after the final acid/water addition. The surfactant is then carbonised in situ by calcination of the membrane under vacuum.

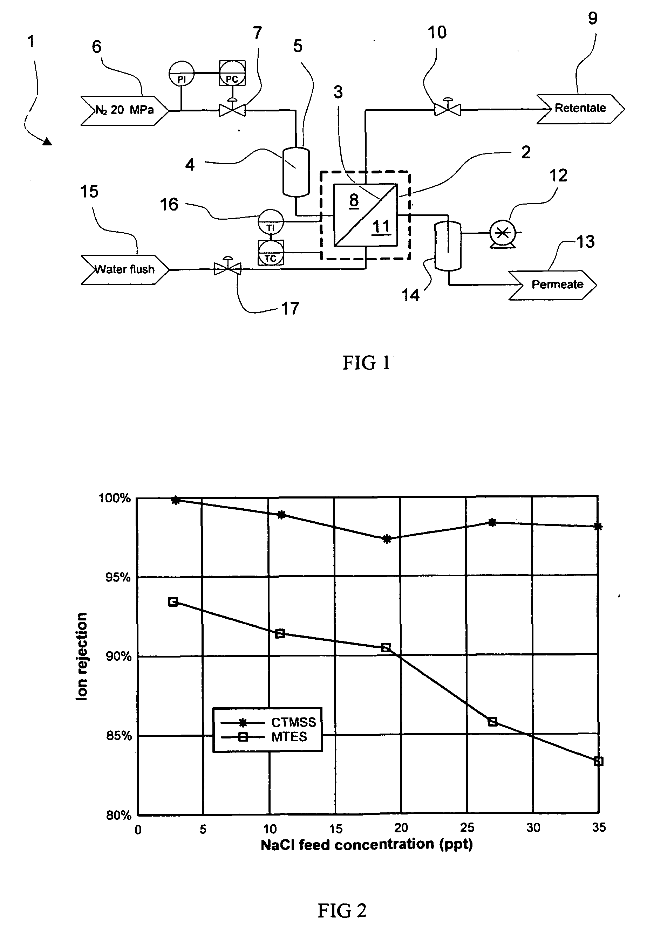

Referring to FIG 1 there is shown a schematic layout of a desalination plant 1 based on a pervaporation membrane cell 2. The membrane 3 is a porous inorganic molecular sieve membrane formed on an α-alumina substrate. A feed liquid 4 is held in a reservoir 5 and supplied to one side of the membrane 3 under a mild positive pressure. The pressure is provided by a 20MPa source of nitrogen 6 and regulated by a pressure control valve 7. As discussed below, the pressure regulation is optional and is displayed for the purpose of depicting one possible embodiment only.

The feed liquid 4 is suitably sea water or other brackish water. For the purposes of demonstration a number of saline solutions were produced with salt content ranging between 3 ppt (ppt stands for parts per thousand and is equivalent to 0.1wt%) and 35 ppt (seawater-like concentration). The feed liquid 4 flows across the retentate side 8 of the membrane 3 and, eventually, to a retentate reservoir 9. Retentate flow is regulated by retentate flow valve 10.

A mild vacuum is maintained on the permeate side 11 of the membrane 3 by vacuum pump 12. Permeate 13 (water) leaves the permeate side 11 of the membrane 3 as vapour which is captured in one or more vapour traps 14. Remaining water vapour exits as permeate 13, but most of this water is condensed and caught in vapour trap 14.

In an alternate embodiment the system may be operated by passing an at least partially dehumidified gas, such as dehumidified air or nitrogen, across the permeate side of the membrane, instead of a vacuum. In this case the gas flow removes the water vapour which emerges on the permeate side of the membrane and the reduced partial pressure of water in the air will draw further permeate through the membrane. In essence any method of removing water vapour from the permeate side of the membrane may be suitable. Also, the vapour could be condensed using a simple condenser or the like instead of a trap, using a liquid pump at the bottom. The vacuum pump will not be required in these embodiments.

The membranes of the invention are not perfectly selective so some small proportion of salt ions may pass through the membrane 3. Salt ions are not volatile so the salt is left behind on the permeate side 11 of the membrane 3 as the permeate water vapour is removed. If left unchecked the build up of salts could eventually block the pores and the flux through the membrane cell 2 would reduce. To address this, cyclic flush 15 (controlled by valve 17) is provided to the membrane cell 2. The permeate side 11 of the membrane 3 is washed with de-ionised water to remove salt build up. The frequency of the cyclic flush will depend upon the particular membrane used and conditions such as the concentration of the salt solution but may be activated anywhere from every 30 minutes up to once every few days, depending on the performance of the membrane i.e. higher salt rejection membranes would lead to a lower flushing frequency. A typical flush frequency would be once a day.

The flush may be allowed to mix with permeate caught in the trap 14 for simplicity of operation. This is a reasonable approach as it may be desirable to have some small amount of sodium and chloride ions in the permeate. However, if this flush was removed separately at the end of the flush cycle, no salt would be caught in the vapour trap 14 and even purer water would be recovered. This gives greater flexibility and reliability when operating the membranes to achieve the best performance. Reverse osmosis does not allow this option.

The membrane cell 2 is also provided with thermal regulation 16 which was used to demonstrate temperature effects in the desalination plant 1. Temperature regulation 16 is not an essential part of the invention.

The effectiveness of the desalination plant 1 is demonstrated in FIG 2 for two different membranes (MTES & CTMSS). The data points represent the salt rejection from liquid feed with salt concentrations of 3ppt, 11ppt, 19ppt, 27ppt and 35ppt. The larger pore (0.5 nm) MTES membrane's ability to reject NaCl decreased from 93% at 3ppt to 83% at seawater-like concentrations, which still represents effective salt removal. The CTMSS membrane shows approximately 99.9% salt rejection at 3ppt but, as is evident in FIG 2, still reduced the salt content to near potable standard for even seawater-like concentrations of 35ppt (when the flush is mixed with the permeated vapour).

High temperature regeneration is a feature of inorganic membranes which can be utilised in desalination to remove fouling species from the membrane. By way of example, high temperature regeneration of the membrane 3 was performed at 500°C. Further testing of the membrane after high temperature regeneration demonstrated improved efficiency and potable water was obtained in one pass through the membrane of even the seawater solution. Desalination performance was, therefore, not reduced by the regeneration step, and in fact, improved performance was observed. High temperature regeneration can be performed between 200°C and 500°C. The membranes of the invention can be exposed to this heating step before use and so a membrane is obtained which can desalinate water to potable standards in one pass.

This ability to withstand high temperatures is a useful feature of inorganic membranes and may, as mentioned above, be used to remove fouling from the membrane to regenerate efficiency of operation. This useful operation is not possible for filtration operations using organic polymeric membranes which cannot withstand such temperatures.

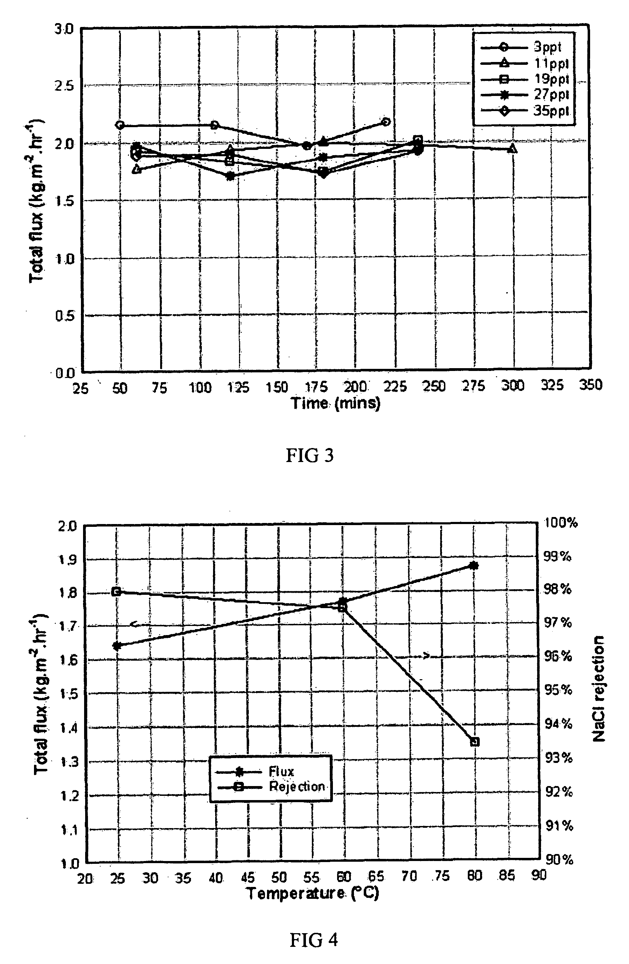

The stability of permeate flux for the apparatus of FIG 1 was also determined to be high. FIG 3 demonstrates that total flux is close to 2 kg.m⁻².hr⁻¹ for at least up to 300 minutes for the CTMSS membrane. This flux is higher than for other molecular sieve membrane desalination technologies operating at the same or similar conditions. Advantageously, the flux is relatively consistent for all salt concentrations.

Most prior art membrane distillation systems demonstrate temperature dependence and generally operate at elevated temperatures. As seen in FIG 4, which represents the changing flux and ion rejection with changing temperature for the CTMSS membrane at 7 bar feed pressure for the 35 ppt sodium chloride solution, the flux increases only marginally with temperature over a range from ambient to 60 degrees. However, the salt rejection is reduced, for the embodiment shown, at temperatures around and above 60°C. FIG 4 shows that this embodiment is particularly suitable for ambient temperature operation, thus reducing energy requirements and making the process more economic than known desalination techniques. However, this drop off in salt rejection is not necessarily demonstrated for all porous inorganic molecular sieve membranes and the inventor has found that certain zeolite membranes demonstrate excellent results at 80°C and the permeate can then be condensed at ambient temperatures. A range of operating temperatures is therefore envisaged depending on the nature of the particular membrane used.

As the removal of water vapour from the permeate side of the membrane provides the driving force for this method of filtration it is not essential to place the salty water on the retentate side under pressure. However, the inventors have found that the application of a pressure above atmospheric pressure can provide benefits in terms of the filtration ability of the membranes. Application of a pressure between 0.10 MPa to 1.00 MPa has been found to result in an increase in the rejection of sodium chloride by the membrane. A pressure of between 0.20 MPa and 0.60 MPa has been found to be particularly useful with a pressure of about 0.40 MPa being optimal. By "about" 0.40 MPa is meant 0.38, 0.39, 0.40, 0.41 or 0.42 MPa. This is more than an order of magnitude less than the 7MPa required for reverse osmosis desalination.

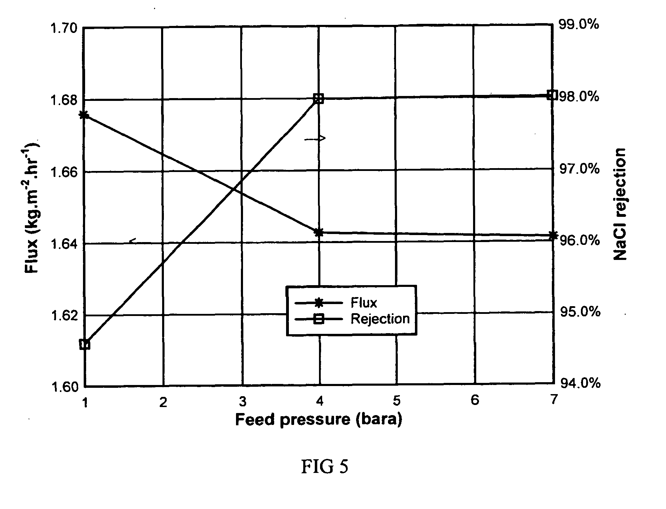

This effect is demonstrated in FIG 5 which portrays the effect of pressure change on the retentate side (feed inlet) of the membrane on flux and salt rejection for the CTMSS membrane at 25°C for the 35 ppt solution. It can be seen that, for increasing pressures up to about 0.40 MPa, a relatively small drop in flux of about 2% (which may simply be within experimental error) is coupled with a relatively large gain in rejection of sodium and chloride ions is achieved. In fact, on increasing the pressure from 0.1 to 0.4 MPa salt rejection increases by almost 5%. In the embodiment used for these tests an increase in pressure beyond 0.4 MPa presented little further improvement in salt rejection. This effect allows the present invention to be more effective while still requiring relatively low pressures and, hence, energy input.

As mentioned above, the major driving force for desalination using the present invention is the removal of the water vapour permeate as it emerges from the permeate side of the membrane. This results in the permeate side of the membrane being maintained at a low water vapour pressure. This means that the water, which emerges from the permeate side of the membrane as a vapour, is constantly removed and so the relative humidity of this side of the membrane is not allowed to build up to the point where there is no gradient for the water to continue to pass through the membrane.

As has been demonstrated herein the present invention is suitable for desalination of water with a range of salt concentrations ranging from brackish to seawater. Water containing even higher amounts of salt, such as brine, may also be effectively desalinated although it will be appreciated that the flux and/or frequency of flush cycles may differ. It should also be understood that, although the invention has been described in terms of desalination which is understood to be the removal of sodium and chloride ions from water, the same membranes and apparatus could be applied to the removal of ions of other salts from water.

To enable the removal of a salt from water the size of the hydrated ions resulting from the salt should be larger than the pores of the inorganic membrane which should be similar to or larger than the size of a water molecule. In this manner the salt ions will be substantially retained and the water allowed to pass through the membrane and emerge as a vapour at the permeate side for collection. Water molecules are approximately 0.26 nm in size while a hydrated sodium ion is 0.72 nm and a hydrated chloride is 0.66 nm.

Thus, while not wishing to be bound by any particular theory, it can be understood that the membranes described herein effectively filter out the salt ions from the water molecules due to their greater size. The pores of the MTES membrane are 0.5 nm in diameter while those of the CTMSS are 0.3 nm. As both are smaller than the size of the hydrated sodium and chloride ions, truly molecular selective separation occurs. Although there may be some contribution made to the filtration effect by any charge which may be presented on the surface of the membranes or alumina support it should be appreciated that, due to the pore sizes presented, the MTES and CTMSS membranes are able to filter out the salt ions while allowing the smaller water molecules to pass. The pH of the salty solutions used in the apparatus of FIG 1 was kept around pH 7 and so any varying charge repulsion effects were minimised.

It should also be appreciated that the membrane pores cannot be entirely uniform in size. Thus the CTMSS membrane is seen in FIG 2 to more effectively remove sodium chloride than the MTES membrane due to its smaller pore size. Even though the pore size of the MTES membrane is considerably smaller than both the sodium and chloride ions there will naturally be a spread of pore sizes around the 0.5 nm average, the larger of which will allow some of these ions to pass. The CTMSS is the more effective membrane sieve as its average pore size is much closer to that of water and so even its larger pore sizes will generally be smaller than the hydrated sodium and chloride ions. The CTMSS membrane also provides advantages in stable performance which can be attributed to the carbonised templates which inhibit silica microstructure degradation.

From the discussion above it should be clear that even a membrane with an average pore size of 0.1 nm will allow some water to pass through and a membrane with an average pore size of 1 nm will retain some proportion of the hydrated salt ions. The pore diameters of the membranes of the present invention may, therefore, be between 0.1 to 1.0 nm. Suitably, the pore diameters will be between 0.25 nm to 0.6 nm. In a particularly preferred embodiment the pore diameters will be about 0.30 nm. By "about 0.30 nm" it is meant that the pore diameters may be 0.28 nm, 0.29 nm, 0.30 nm, 0.31 nm or 0.32 nm.

Therefore, the membranes of the present invention may be suitable for the removal of other salts from water or another solvent so long as the diameter of the pores of the membrane are relatively similar to or slightly greater than the size of the solvent molecules to be allowed to pass through and collected as the permeate and smaller than the size of the hydrated ions which are to be substantially retained. Non-limiting examples of other salts which may be removed using the method of the present invention include various of chlorides, bromides, sulphates and nitrates of magnesium, potassium, calcium and the like.

The suitability of any particular membrane for desalination or removal of various salts can be determined by reference to the membranes ability to selectively separate certain gases. This property is discussed in our granted US patent number 6943123. For example, the ability of a membrane to separate helium and sulphur hexafluoride or to separate hydrogen (0.29 nm in size) from nitrogen (0.36 nm) or carbon monoxide (0.38 nm) gives a good indication of the average pore size of the membrane and hence which salt ions it is capable of filtering out. Membranes of the zeolite family may have their pore size determined by other means such as X-ray diffraction.

The term "salty water" as used herein should be understood to include any concentration of sodium chloride in water as well as aqueous solutions containing other dissolved salts in addition to or instead of, sodium chloride.

The desalination results exhibited in FIG's 2-5 show that the present invention is capable of achieving desalination efficiency sufficient to generate potable water from sea water. The invention operates with a flux that is greater than known desalination processes including zeolite reverse osmosis and other membrane pervaporation technologies. The process is capable of operating efficiently at ambient temperature (around 25°C), if desired, and with a low or ambient pressure feed.

Throughout the specification the aim has been to describe the invention without limiting the invention to any particular combination of alternate features.

## Claims

1. A method of desalinating water including the steps of:
(a) supplying salty water to a retentate side of a porous inorganic molecular sieve membrane, the porous inorganic molecular sieve membrane selected from the group consisting of methyl triethoxy silane molecular sieve membranes and carbonised template molecular sieve silica membrans
(b) removing water vapour which emerges on a permeate side of the porous inorganic molecular sieve membrane to maintain the permeate side of the membrane at a low water vapour pressure; and
(c) collecting desalinated water vapour which emerged from the permeate side of the membrane.

2. The method of claim 1 wherein the water vapour is removed from the permeate side of the porous inorganic molecular sieve membrane by the application of a vacuum.

3. The method of claim 1 wherein the water vapour is removed from the permeate side of the porous inorganic molecular sieve membrane by a flow of gas.

4. The method of claim 1 wherein the salty water is supplied at a pressure above atmospheric pressure.

5. The method of claim 4 wherein the salty water is supplied at a pressure of from 0.1 MPa to 1.0 MPa.

6. The method of claim 5 wherein the salty water is supplied at a pressure of from 0.2 MPa to 0.6 MPa.

7. The method of claim 6 wherein the salty water is supplied at a pressure of about 0.4 MPa.

8. The method of claim 1 further comprising the step of flushing salt from the permeate side of the porous inorganic molecular sieve membrane using water.

9. The method of claim 1 wherein the porous inorganic molecular sieve membrane comprises pores having a diameter of from 0.2 nm to 1.0 nm.

10. The method of claim 9 wherein the porous inorganic molecular sieve membrane comprises pores having a diameter of from 0.25 nm to 0.6 nm.

11. The method of claim 10 wherein the pores have a diameter of about 0.30 nm.

## Patentansprüche

1. Wasserentsalzungsverfahren, enthaltend die Schritte:
(a) Zuführen von salzigem Wasser zu einer Retentatseite einer porösen anorganischen Molekularsiebmembran, wobei die poröse anorganische Molekularsiebmembran aus der aus Methyltriethoxysilan-Molekularsiebmembranen und templatcarbonisierten Molekularsiebsilicamembranen bestehenden Gruppe ausgewählt wird;
(b) Entfernen von Wasserdampf, welcher auf einer Permeatseite der porösen anorganischen Molekularsiebmembran entsteht, um die Permeatseite der Membran bei einem geringen Wasserdampfdruck zu halten; und
(c) Sammeln von entsalztem Wasserdampf, welcher an der Permeatseite der Membran entsteht.

2. Verfahren von Anspruch 1, wobei der Wasserdampf von der Permeatseite der porösen anorganischen Molekularsiebmembran durch Anlegen eines Vakuums entfernt wird.

3. Verfahren von Anspruch 1, wobei der Wasserdampf von der Permeatseite der porösen anorganischen Molekularsiebmembran durch einen Gasstrom entfernt wird.

4. Verfahren von Anspruch 1, wobei das salzige Wasser bei einem Druck über Atmosphärendruck zugeführt wird.

5. Verfahren von Anspruch 4, wobei das salzige Wasser bei einem Druck von 0,1 MPa bis 1,0 MPa zugeführt wird.

6. Verfahren von Anspruch 5, wobei das salzige Wasser bei einem Druck von 0,2 MPa bis 0,6 MPa zugeführt wird.

7. Verfahren von Anspruch 6, wobei das salzige Wasser bei einem Druck von etwa 0,4 MPa zugeführt wird.

8. Verfahren von Anspruch 1, das ferner einen Schritt des Ausspülens von Salz aus der Permeatseite der porösen anorganischen Molekularsiebmembran unter Verwendung von Wasser umfasst.

9. Verfahren von Anspruch 1, wobei die poröse anorganische Molekularsiebmembran Poren mit einem Durchmesser von 0,2 nm bis 1,0 nm umfasst.

10. Verfahren von Anspruch 9, wobei die poröse anorganische Molekularsiebmembran Poren mit einem Durchmesser von 0,25 nm bis 0,6 nm umfasst.

11. Verfahren von Anspruch 10, wobei die Poren einen Durchmesser von etwa 0,30 nm aufweisen.

## Revendications

1. Procédé pour dessaler l'eau renfermant les étapes consistant à :
(a) fournir de l'eau saline du côté rétentat d'une membrane de tamis moléculaire inorganique poreuse, cette membrane de tamis moléculaire inorganique poreuse étant choisie dans le groupe constitué par les membranes de tamis moléculaires à base de méthyl triéthoxy silane et les membranes siliciques de tamis moléculaires en silice à modèle carbonisé,
(b) éliminer la vapeur d'eau sortant du côté perméat de la membrane de tamis moléculaire inorganique poreuse de façon à maintenir le côté perméat de cette membrane sous une faible pression de vapeur d'eau, et
(c) recueillir la vapeur d'eau dessalée sortant du côté perméat de la membrane.

2. Procédé conforme à la revendication 1,
selon lequel
la vapeur d'eau est éliminée du côté perméat de la membrane de tamis moléculaire inorganique poreuse par application d'un vide.

3. Procédé conforme à la revendication 1,
selon lequel
la vapeur d'eau est éliminée du côté perméat de la membrane de tamis moléculaire inorganique poreuse par un flux de gaz.

4. Procédé conforme à la revendication 1,
selon lequel
l'eau saline est fournie sous une pression située au-dessus de la pression atmosphérique.

5. Procédé conforme à la revendication 4,
selon lequel
l'eau saline est fournie sous une pression comprise entre 0,1 MPa et 1,0 MPa.

6. Procédé conforme à la revendication 5,
selon lequel
l'eau saline est fournie sous une pression comprise entre 0,2 MPa et 0,6 MPa.

7. Procédé conforme à la revendication 6,
selon lequel
l'eau saline est fournie sous une pression d'environ 0,4 MPa.

8. Procédé conforme à la revendication 1, comprenant en outre une étape consistant à chasser le sel du côté perméat de la membrane de tamis moléculaire inorganique poreuse en utilisant de l'eau.

9. Procédé conforme à la revendication 1,
selon lequel
la membrane de tamis moléculaire inorganique poreuse comporte des pores ayant un diamètre compris entre 0,2 nm et 1,0 nm.

10. Procédé conforme à la revendication 9,
selon lequel
la membrane de tamis moléculaire inorganique poreuse comporte des pores ayant un diamètre compris entre 0,25 nm et 0,6 nm.

11. Procédé conforme à la revendication 10,
selon lequel
les pores ont un diamètre d'environ 0,30 nm.
